# EUROPÄISCHE PATENTANMELDUNG

(11) **EP 2 213 706 A1**
(43) Veröffentlichungstag der Anmeldung: **04.08.2010**
(21) Anmeldenummer: 09151977.7
(22) Anmeldetag: 03.02.2009
(51) Int. Cl.: C09D 5/02, C09D 5/34, C09D 7/12, C09J 11/04

(54) **Additiv zur Verbesserung der Lösemittelbeständigkeit und anderer Eigenschaften von wasserbasierten Bindemittelsystemen**

(71) Anmelder: Bühler PARTEC GmbH, 66123 Saarbrücken (DE)
(72) Erfinder: Burgard, Detlef, 66333 Völklingen (DE); Steingröver, Klaus, 66125 Saarbrücken (DE); Herold, Marc, 66123 Saarbrücken (DE)
(74) Vertreter: Barz, Peter

(57) **Zusammenfassung**

Es wird die Verwendung einer wässrigen Dispersion, die nanoskalige ZnO-Teilchen und nanoskalige Teilchen aus einem von ZnO verschiedenen Metalloxid, Halbmetalloxid oder Oxosalz umfasst, oder eines Kits von wässrigen Dispersionen zur Verbesserung der Lösemittelbeständigkeit und anderer Eigenschaften von wässrigen Bindemittelsystemen, wie Lacken, Klebern, Versiegelungsmassen und Bindern, beschrieben.

## Beschreibung

Die Erfindung betrifft die Verwendung eines zinkoxidhaltigen Additivs zur Verbesserung der Lösemittelbeständigkeit oder anderer Eigenschaften, wie Beständigkeit oder Trocknungsverhalten, von wasserbasierten Bindemittelsystemen, das Additiv und einen wässrigen Lack, der das Additiv enthält.

Zinkoxid wird bereits für verschiedene Zwecke in wasserbasierten Lacken eingesetzt. Gut bekannt ist seine Verwendung als Weißpigment. In Holzlacken wird ZnO neben anderen Zinksalzen als Additiv verwendet, um das Ausbluten von Gerbsäure zu verhindern. Zinkoxid wird auch in Grundierungen auf Metallen als Haftvermittler verwendet. Für diese Anwendungen werden Zinkoxid-Teilchen mit einem Durchmesser von mehr als 1 µm eingesetzt.

Zinkoxid und andere Metalloxide werden auch in Lacken eingesetzt, um UV-Schutz, Lösemittelbeständigkeit und Oberflächenhärte zu verbessern. In WO 2008/049679 wird die Verwendung von Nanopartikeln für Lacke auf organischer Lösemittelbasis beschrieben, um eine Verbesserung der Kratzfestigkeit und der Flexibilität zu erreichen. US-B1-6342556 beschreibt die Verwendung von ZnO-Partikeln mit einem Durchmesser von 10 bis 80 nm in Wasser in Kombination mit Lacken für einen verbesserten UV-Schutz von Holz.

WO 2005/071002 betrifft die Verwendung von einer Dispersion enthaltend ZnO mit einer BET Oberfläche von 10 bis 200 m²/g als transparenter UV-Schutz in Lacken. Bei den in dieser Anmeldung beschriebenen ZnO-Partikeln handelt es sich um pyrogen hergestellte Partikel, die in Dispersion eine mittlere Sekundärpartikelgröße von weniger als 300 nm aufweisen. Diese pyrogen erzeugten Partikel besitzen zwar eine spezifische Oberfläche in der Größenordnung von nanopartikulärem Zinkoxid, mit ihnen lassen sich aber keine transparenten Schichten herstellen. Das in WO 2005/071002 spezifizierte Additiv ist daher zur Verwendung in transparenten Lacksystemen ungeeignet.

In WO 2005/071029 wird Zinkoxid mit einem Partikeldurchmesser kleiner 100 nm verwendet, um die Oberflächenhärte und die Kratzfestigkeit von Polyurethan (PUR)-Lacken zu verbessern. WO 2006/023064 betrifft die Verwendung von ZnO-Dispersionen in PUR-Bindern zur Herstellung von kratzfesten Fußbodenbeschichtungen. In WO2006/023064 wird die Herstellung von kratzfesten Holzschutzlacken durch den Einsatz von ZnO-Dispersionen in Acrylbindern beschrieben. Eine Mischung aus Al₂O₃-Mikro- und Nanopartikeln wird in PU- und Melamin/Formaldehyd-Harzen zur Verbesserung der Oberflächenhärte verwendet (WO 03/040223).

WO 2006/023064 beschreibt die Verwendung von 2 bis 20% nanoskaligem Zinkoxid in acrylathaltigen Lacken und Beschichtungen, um z.B. die Haftung, Tanninbeständigkeit oder Korrosionsbeständigkeit zu verbessern. Da der Anteil des relativ kostenintensiven ZnO bei über 2 % liegt, ist die Zusammensetzung wirtschaftlich für den Bereich der Topcoats nicht relevant. WO 2006/023065 betrifft Beschichtungszusammensetzungen, die mikroskalige TiO₂-Pigmente und nanoskaliges Metalloxid wie ZnO enthalten, wobei das nanoskalige Metalloxid für einen gleichmäßigen Abstand der TiO₂-Pigmente in der Schicht sorgen soll.

WO 2005/119359 und US-A1-2003/0180466 beschreiben filmbildende Zusammensetzungen, die Bindemittel, Nanopartikel, Tensid und ein polymeres Dispergiermittel umfassen, um die Abriebbeständigkeit von damit beschichteten Substraten zu verbessern.

Zur Erhöhung der Lösemittelbeständigkeit von Beschichtungen wird unter anderem die nachträgliche Vernetzung mit UV-Initiatoren angewendet, wie z.B. in US 4121985 gezeigt. Gemäß JP-A-62-28496 werden lösemittelbeständige Schichten durch den Einsatz von sauer/basisch vernetzenden Bindemittelbestandteilen erzeugt. Neben der Verwendung von UV-Initiatoren werden auch funktionelle Silane zur Nachvernetzung von Polymerschichten eingesetzt, wie z.B. in DE-T2-69426674 beschrieben. In JP-A-11012426 werden Harzzusammensetzungen enthaltend carboxyliertes Acrylharz und anorganische Partikel mit Oxazolingruppen auf der Oberfläche beschrieben, um Beschichtungen mit guter Lösemittelbeständigkeit zu erhalten.

WO 2008/064114 betrifft die Verwendung von ZnO-Teilchen mit einem Durchmesser von weniger als 1 µm in einem Acrylat-Hybridlack zur Verbesserung der Lösemittelbeständigkeit, der Feuchtigkeitsbeständigkeit und der UV-Beständigkeit. JP-A-57123271 betrifft Klarlackzusammensetzungen, wie Acryllacke, zu denen SnO₂- oder In₂O₃-Pulver mit einem Durchmesser < 100 nm gegeben wird, um u.a. die Lösemittelbeständigkeit zu verbessern. Wegen der Kosten der eingesetzten Pulver, insbesondere des In₂O₃-Pulvers, ist dieser Ansatz von geringem wirtschaftlichen Interesse.

Eine UV-Nachvernetzung zur Verbesserung der Lösemittelbeständigkeit erfordert einen zusätzlichen Prozessschritt. Außerdem führt eine chemische Nachvernetzung zur Versprödung der Lackschicht. Die limitiert den Einsatz insbesondere für Anwendungen, bei denen eine hohe Elastizität erforderlich ist.

Es besteht damit ein Bedarf an Additiven für Bindemittelsysteme, insbesondere Lacksysteme, mit denen die Lösemittelbeständigkeit von wasserhaltigen Bindemittelsystemen signifikant verbessert werden kann, ohne durch Zugabe großer Mengen das Gesamtprofil des Bindemittelsystems zu verschlechtern. Dabei sollten schon Zugabemengen von weniger als 2 Gew.-% einen signifikanten Effekt erzielen, um eine Verringerung der Herstellungskosten zu ermöglichen und die sonstigen Eigenschaften des Bindemittelsystems, insbesondere eines Lacks möglichst wenig zu beeinträchtigen.

Überraschenderweise wurde gefunden, dass die Kombination von mindestens zwei anorganischen Nanopartikeldispersionen eine synergistische Verstärkung der Lösemittelbeständigkeit bewirkt. Bei den Partikelmischungen handelt es sich um Mischungen aus Zinkoxid mit mindestens einem anderen Metalloxid, Halbmetalloxid oder Oxosalz.

Demgemäß betrifft die vorliegende Erfindung die Verwendung einer wässrigen Dispersion, die nanoskalige ZnO-Teilchen und nanoskalige Teilchen aus einem von ZnO verschiedenen Metalloxid, Halbmetalloxid oder Oxosalz umfasst, oder eines Kits aus mindestens zwei wässrigen Dispersionen, wobei eine erste wässrige Dispersion nanoskalige ZnO-Teilchen umfasst und eine oder mehrere weitere wässrige Dispersionen nanoskalige Teilchen aus einem von ZnO verschiedenen Metalloxid, Halbmetalloxid oder Oxosalz umfassen, zur Verbesserung der Lösemittelbeständigkeit eines wässrigen Bindemittelsystems.

Die Zugabe der genannten wässrigen Dispersion zum wässrigen Bindemittelsystem ergibt eine überraschend starke Verbesserung der Lösemittelbeständigkeit des gehärteten Bindemittelsystems, z.B. bei einem auf ein Substrat aufgetragenen und getrockneten bzw. gehärteten Lack im Vergleich zu Lacken, in denen nur eine Sorte von nanoskaligen Teilchen zugegeben wird. Es wurde festgestellt, dass weitere Eigenschaften, z.B. die Trocknungseigenschaften, des Bindemittelsystems durch Zugabe der wässrigen Dispersion oder des Kits von wässrigen Dispersionen verbessert werden konnten. Die Erfindung wird im folgenden ausführlich erläutert.

Das Additiv, das zur Verbesserung der Lösemittelbeständigkeit eines wässrigen Bindemittels verwendet wird, ist eine wässrigen Dispersion, die nanoskalige ZnO-Teilchen und nanoskalige Teilchen aus einem von ZnO verschiedenen Metalloxid, Halbmetalloxid oder Oxosalz umfasst, oder ein Kit aus mindestens zwei wässrigen Dispersionen, wobei eine erste wässrige Dispersion nanoskalige ZnO-Teilchen umfasst und eine oder mehrere weitere wässrige Dispersionen nanoskalige Teilchen aus einem von ZnO verschiedenen Metalloxid, Halbmetalloxid oder Oxosalz umfassen. Das Additiv besteht bevorzugt aus einer Mischung von mindestens zwei nanopartikulären wässrigen Dispersionen.

Als nanoskalige ZnO-Teilchen können alle dem Fachmann bekannten eingesetzt werden. Solche nanoskaligen ZnO-Teilchen sind im Handel erhältlich oder können ohne weiteres durch dem Fachmann bekannte Verfahren hergestellt werden. Bei den ZnO-Teilchen kann es sich auch um hydrophobe nanoskalige ZnO-Teilchen handeln.

Ferner umfasst das Additiv mindestens eine weitere Art von nanoskaligen Teilchen ausgewählt aus einem von ZnO verschiedenen Metalloxid, Halbmetalloxid oder Oxosalz, wobei Teilchen aus einem Metalloxid oder Halbmetalloxid bevorzugt sind. Metall- oder Halbmetalloxide schließen hier auch hydratisierte Oxide, Hydroxidoxide oder Hydroxide ein. Auch nanoskalige Teilchen aus Metalloxid, Halbmetalloxid oder Oxosalz sind dem Fachmann bekannt und im allgemeinen im Handel erhältlich oder sie können ohne weiteres durch dem Fachmann bekannte Verfahren hergestellt werden.

Bei den nanoskaligen Teilchen ausgewählt aus einem von ZnO verschiedenen Metalloxid, Halbmetalloxid oder Oxosalz kann es sich auch um Kern-Schale-Teilchen handeln, die einen Kern aus einem beliebigen Material und eine Schale aus einem von ZnO verschiedenen Metalloxid, Halbmetalloxid oder Oxosalz aufweisen. Zweckmäßigerweise besteht auch der Kern aus einem von ZnO verschiedenen Metalloxid, Halbmetalloxid oder Oxosalz, wobei das Material für den Kern und das Material für die Schale verschieden sind. Bei dem Metall- oder Halbmetalloxid kann es sich auch um ein Mischoxid handeln, d.h. ein Oxid von zwei oder mehr Metallen oder Halbmetallen, was auch hydratisierte Oxide, Hydroxidoxide oder Hydroxide einschließt. Mischoxide umfassen z.B. Silicate, wie z.B. Alumosilicate, und Mischoxide von Aluminium und Silicium.

Das Oxosalz ist bevorzugt ein in Wasser schwerlösliches oder unlösliches Salz. Im allgemeinen handelt es sich um ein Metalloxosalz. Ein Oxosalz umfasst ein Sauerstoff enthaltendes Anion, z.B. das Anion von einer Oxosäure. Beispiele für geeignete Oxosalze sind Sulfate, Phosphate und Carbonate, z.B. Metallsulfate, -phosphate und -carbonate. Beispiele für einsetzbare Oxosalze, die in Form von nanoskaligen Teilchen eingesetzt werden können, sind CaCO₃ und BaSO₄.

Konkrete Beispiele für geeignete nanoskalige Halbmetall- und Metalloxide für die nanoskaligen Teilchen sind SiO₂, insbesondere Fällungskieselsäuren, Aluminiumoxide, Titandioxid, Zirconiumdioxid, Cerdioxid, Yttriumoxid, Mischoxide aus Aluminiumoxid und Siliciumdioxid, Alumosilicate, Eisenoxide, einschließlich Eisenhydroxidoxiden, und Kern-Schale-Partikel, die einen Kern aus einem beliebigen Metalloxid und eine Schale aus SiO₂ besitzen, die jeweils hydratisierte Oxide, Hydroxidoxide oder Hydroxide mit einschließen. Bevorzugte Beispiele für nanoskalige Teilchen aus einem Metall- oder Halbmetalloxid sind Teilchen aus SiO₂, Al₂O₃ oder Fe₂O₃ oder anderen Eisenoxiden, wobei SiO₂ besonders bevorzugt ist. SiO₂ kann z.B. in Form von kolloidalem SiO₂ oder pyrogenem SiO₂ eingesetzt werden. Beispiele für geeignete nanoskalige SiO₂-Teilch sind z.B. handelsübliche Kieselsole, pyrogene Kieselsäuren oder Fällungskieselsäuren.

Bei den nanoskaligen Teilchen ausgewählt aus einem von ZnO verschiedenen Metalloxid, Halbmetalloxid oder Oxosalz handelt es sich vorzugsweise um hydrophobe nanoskalige Teilchen. Konkrete Beispiele für geeignete hydrophobe nanoskalige Metalloxide oder Halbmetalloxide sind hydrophobe Fällungskieselsäure (z.B. Sipernat^{®} D17), hydrophobe Aluminiumoxide, hydrophobes Titandioxid, hydrophobes Zirconiumdioxid, hydrophobes Cerdioxid, hydrophobes Yttriumoxid, hydrophobe Mischoxide aus Aluminiumoxid und Siliciumdioxid, hydrophobe Alumosilicate, hydrophobe Eisenoxide und Kern-Schale-Partikel, die ein Kern aus einem beliebigen Metalloxid und einer Schale aus SiO₂ besitzen und anschließend mit einem gängigen Verfahren hydrophobisiert wurden. Bevorzugte eingesetzte Beispiele sind hydrophobes SiO₂ und hydrophobes Al₂O₃, wobei hydrophobes SiO₂, insbesondere hydrophobe Fällungskiesel, besonders bevorzugt ist. Auch bei den Oxosalzen können hydrophobe nanoskalige Oxosalze mit Vorteil verwendet werden.

Metalloxid-, Halbmetalloxid- oder Oxosalz-Teilchen sind in der Regel aufgrund von Oxo- oder Hydroxygruppen auf der Oberfläche hydrophil. Es ist in der Technik bekannt, dass solche hydrophilen Teilchen hydrophobisiert werden können. Geeignete Verfahren sind bekannt und durch Hydrophobisierung hergestellte hydrophobe Teilchen sind im Handel erhältlich. Zur Hydrophobisierung können die Teilchen z.B. mit Oberflächenmodifizierungsmitteln umgesetzt werden, die hydrophobe Gruppen, wie Alkylgruppen aufweisen. Die Oberflächenmodifizierungsmittel lagern sich dann an der Oberfläche der Teilchen an und verleihen den Teilchen durch ihre hydrophoben Gruppen, wie den Alkylgruppen, hydrophobe Eigenschaften. Kieselsäuren werden z.B. in der Technik durch Umsetzung mit Chlorsilanen, wie Dimethyldichlorsilan, oder Alkylalkoxysilanen hydrophobisiert.

In einer speziellen Ausführungsform sind neben den nanoskaligen ZnO-Teilchen mindestens zwei und insbesondere genau zwei Arten von nanoskaligen Teilchen aus einem von ZnO verschiedenen Metalloxid, Halbmetalloxid oder Oxosalz in der wässrigen Dispersion oder dem Kit enthalten, wofür alle vorstehend genannten Materialien in Frage kommen. Bevorzugt ist dabei eine wässrige Dispersion, die nanoskalige ZnO-Teilchen, nanoskalige SiO₂-Teilchen und mindestens eine weitere Art von nanoskaligen Teilchen, z.B. aus Eisenoxid oder Aluminiumoxid, umfasst, oder ein Kit aus zwei wässrigen Dispersionen, wobei die erste wässrige Dispersion nanoskalige ZnO-Teilchen umfasst und die weitere wässrige Dispersion nanoskalige SiO₂-Teilchen und mindestens eine weitere Art von nanoskaligen Teilchen, z.B. aus Eisenoxid oder Aluminiumoxid, umfasst. Auch in dieser Ausführungsform mit mindestens zwei Arten von nanoskaligen Teilchen aus einem von ZnO verschiedenen Metalloxid, Halbmetalloxid oder Oxosalz ist es bevorzugt, dass mindestens eines oder zwei der eingesetzten nanoskaligen Teilchen aus einem von ZnO verschiedenen Metalloxid, Halbmetalloxid oder Oxosalz hydrophob sind, z.B. hydrophobes SiO₂.

Die in der wässrigen Dispersion der Mischung oder dem Kit eingesetzten ZnO-Teilchen und die Teilchen aus einem von ZnO verschiedenen Metalloxid, Halbmetalloxid oder Oxosalz sind nanoskalig. Unter nanoskaligen Teilchen werden wie in der Technik üblich Teilchen mit einem mittleren Teilchendurchmesser von weniger als 1 µm verstanden. Unter dem mittleren Teilchendurchmesser wird hier das Volumenmittel des Teilchendurchmessers verstanden. Sofern nicht anders angegeben ist der d₅₀-Wert gemeint. Der mittlere Teilchendurchmesser wird durch ein dynamisches Streulichtverfahren ermittelt, z.B. mit dem Messinstrument Nanotrac Particle Size Analyzer von Microtrac Inc., USA.

Der mittlere Teilchendurchmesser, ausgedrückt als d₅₀-Wert, der ZnO-Teilchen und der Teilchen aus einem von ZnO verschiedenen Metalloxid, Halbmetalloxid oder Oxosalz ist daher unter 1 µm. Die nanoskaligen ZnO-Teilchen haben bevorzugt einen mittleren Teilchendurchmesser, ausgedrückt als d₉₀-Wert, von nicht mehr als 200 nm und besonders bevorzugt nicht mehr als 100 nm. Die Teilchen aus einem von ZnO verschiedenen Metalloxid, Halbmetalloxid oder Oxosalz haben bevorzugt einen mittleren Teilchendurchmesser, ausgedrückt als d₅₀-Wert, von nicht mehr als 500 nm.

Nanoskalige ZnO-Teilchen und/oder nanoskalige Teilchen aus einem von ZnO verschiedenen Metalloxid, Halbmetalloxid oder Oxosalz mit einer geeigneten Größe können z.B. auch aus entsprechenden Teilchen mit einem größeren Teilchendurchmesser, z.B. im mikroskaligen Bereich, erhalten werden, indem größere Teilchen zerkleinert werden, z.B. in einer Dispergiermaschine, wie einer Mühle.

Bei der die nanoskaligen Teilchen enthaltenden Dispersion handelt es sich um eine wässrige Dispersion, d.h. das in der Dispersion eingesetzte Lösemittel ist zum überwiegenden Teil oder ausschließlich Wasser. Es können geringe Teile an organischem Lösemittel enthalten sein, z.B. weniger als 20 Gew.-%, bezogen auf das Gesamtgewicht von Wasser und organischem Lösemittel in der wässrigen Dispersion, bevorzugt weniger als 10 Gew.-% und bevorzugter weniger als 5 Gew.-%. Die vorstehenden Angaben zum Lösemittel in der wässrigen Dispersion beziehen sich dabei sowohl auf die eingesetzte einzelne wässrige Dispersion, die die Mischung der nanoskaligen Teilchen enthält, im folgenden auch als wässrige Dispersion der Mischung bezeichnet, als auch auf jede der einzelnen wässrigen Dispersionen, aus denen der Kit besteht, im folgenden auch als wässrige Dispersion des Kits bezeichnet.

Die wässrige Dispersion umfasst bevorzugt ein oder mehrere Dispergierhilfsmittel bzw. Dispergiermittel, die dazu dienen, die wässrige Dispersion der nanoskaligen Teilchen zu bilden und/oder zu stabilisieren. Als Dispergiermittel können z.B. übliche nicht-ionische, kationische, anionische oder amphotere Tenside eingesetzt werden. Solche Dispergiermittel sind üblich und der Fachmann kann ohne weiteres in Abhängigkeit von den eingesetzten Teilchen ein zweckmäßiges Dispergiermittel auswählen. Die vorstehenden Angaben zum Dispergiermittel in der wässrigen Dispersion beziehen sich dabei sowohl auf die wässrige Dispersion der Mischung als auch für jede einzelne wässrige Dispersion des Kits.

Das Mengenverhältnis von nanoskaligen ZnO-Teilchen und nanoskaligen Teilchen aus einem von ZnO verschiedenen Metalloxid, Halbmetalloxid oder Oxosalz in der wässrigen Dispersion kann in weiten Bereichen variieren. Im allgemeinen ist es aber zweckmäßig, dass, bezogen auf die Gesamtmenge von nanoskaligen ZnO-Teilchen und nanoskaligen Teilchen aus einem von ZnO verschiedenen Metalloxid, Halbmetalloxid oder Oxosalz, mindestens 50 Gew.-% nanoskaliger ZnO-Teilchen enthalten sind. Der Anteil an nanoskaligen Teilchen aus einem von ZnO verschiedenen Metalloxid, Halbmetalloxid oder Oxosalz liegt zweckmäßigerweise im Bereich von 0,1 bis 50 Gew.-%, bevorzugt 0,5 bis 20 Gew.-% und bevorzugter 2 bis 15 Gew.-%, bezogen auf die Gesamtmenge von nanoskaligen ZnO-Teilchen und nanoskaligen Teilchen aus einem von ZnO verschiedenen Metalloxid, Halbmetalloxid oder Oxosalz.

Die vorstehenden Angaben zum Mengenverhältnis beziehen sich auf die wässrige Dispersion der Mischung. Sofern ein Kit aus mindestens zwei wässrigen Dispersionen verwendet wird, werden die wässrigen Dispersionen geeigneterweise jeweils in solchen Mengen zum wässrigen Bindemittelsystem zugegeben, dass insgesamt nanoskalige ZnO-Teilchen und nanoskalige Teilchen aus einem von ZnO verschiedenen Metalloxid, Halbmetalloxid oder Oxosalz in den oben angegebenen Mengenverhältnissen zugegeben werden.

Der Gehalt an nanoskaligen ZnO-Teilchen und nanoskaligen Teilchen aus einem von ZnO verschiedenen Metalloxid, Halbmetalloxid oder Oxosalz in der wässrigen Dispersion der Mischung kann in weiten Bereichen variieren und z.B. 1 bis 80 Gew.-%, bevorzugt 25 bis 60 Gew.-% oder 30 bis 50 Gew.-%, bezogen auf das Gesamtgewicht der wässrigen Dispersion, betragen. Auch wenn ein Kit aus wässrigen Dispersionen eingesetzt wird, kann der Gehalt an nanoskaligen Teilchen in den wässrigen Dispersionen des Kits in weiten Bereichen variieren. Der Gehalt an nanoskaligen ZnO-Teilchen in der ersten wässrigen Dispersion des Kits kann z.B. 1 bis 80 Gew.-%, bevorzugt 20 bis 70 Gew.-% oder 30 bis 60 Gew.-%, bezogen auf das Gesamtgewicht der ersten wässrigen Dispersion, betragen, und der Gehalt an nanoskaligen Teilchen aus einem von ZnO verschiedenen Metalloxid, Halbmetalloxid oder Oxosalz in der weiteren wässrigen Dispersion des Kits kann z.B. 1 bis 80 Gew.-%, bevorzugt 5 bis 50 Gew.-% oder 7,5 bis 40 Gew.-%, bezogen auf das Gesamtgewicht der weiteren Dispersion, betragen.

Die Menge der wässrigen Dispersion der Mischung oder des Kit von wässrigen Dispersionen, die zum wässrigen Bindemittelsystem gegeben wird, kann in breiten Bereichen variieren. Die Zugabe erfolgt aber bevorzugt in solchen Mengen, das der Massenanteil der nanoskaligen ZnO-Teilchen und nanoskaligen Teilchen aus einem von ZnO verschiedenen Metalloxid, Halbmetalloxid oder Oxosalz insgesamt in dem getrockneten oder gehärteten Bindemittelsystem, insbesondere in einer Lackschicht, z.B im Bereich von 0,01 bis 20 Gew.-%, bevorzugt 0,1 bis 5 Gew.-% und besonders bevorzugt 0,15 bis 2,5 Gew.-% liegt.

Wie gesagt kann eine einzelne wässrige Dispersion, die die nanoskaligen ZnO-Teilchen und die nanoskaligen Teilchen aus einem von ZnO verschiedenen Metalloxid, Halbmetalloxid oder Oxosalz enthält, also eine wässrige Dispersion der Mischung, oder ein Kit von gesonderten wässrigen Dispersionen verwendet werden. Eine wässrige Dispersion kann allgemein z.B. durch Zugabe von Wasser und gegebenenfalls Dispergiermittel oder organischem Lösemittel zu einem Pulver der nanoskaligen Teilchen erhalten werden oder sie wird unmittelbar aus dem Herstellungsprozess der nanoskaligen Teilchen erhalten.

Bevorzugt ist der Einsatz einer einzelnen wässrigen Dispersion. Zur Herstellung der wässrigen Dispersion der Mischung können z.B. zunächst gesondert wässrige Dispersionen der verschiedenen Arten von einzusetzenden nanoskaligen Teilchen bereitgestellt werden, gegebenenfalls unter Verwendung eines geeigneten Dispergiermittels. Die so hergestellten wässrigen Dispersionen werden dann in einem solchen Verhältnis gemischt, dass eine wässrige Dispersion mit dem gewünschten Mengenverhältnis der verschiedenen nanoskaligen Teilchen erhalten wird. Zur Verbesserung der Lösemittelbeständigkeit und anderer Eigenschaften eines wässrigen Bindemittelsystems wird die wässrige Dispersion der Mischung zum wässrigen Bindemittelsystem gegeben und damit vermischt.

Bei einem Kit enthält die erste wässrige Dispersion die nanoskaligen ZnO-Teilchen und die weitere wässrige Dispersion die nanoskaligen Teilchen aus einem von ZnO verschiedenen Metalloxid, Halbmetalloxid oder Oxosalz. Wenn ein weiterer Typ von nanoskaligen Teilchen aus einem von ZnO verschiedenen Metalloxid, Halbmetalloxid oder Oxosalz verwendet wird, können diese Teilchen in der ersten oder in der weiteren wässrigen Dispersion des Kits enthalten sein. Sie können aber auch gesondert in einer dritten wässrigen Dispersion des Kits enthalten sein. Die wässrigen Dispersionen des Kits werden gesondert, gleichzeitig oder nacheinander in das wässrige Bindemittelsystem gegeben.

Bei dem wässrigen Bindemittelsystem, zu dem die wässrige Dispersion der Mischung oder die wässrigen Dispersionen des Kits als Additiv zugegeben werden soll, kann es sich um jedes übliche, dem Fachmann bekannte wässrige Bindemittelsystem handeln. Solche wasserbasierten Bindemittelsysteme sind im Handel erhältlich. Das Bindemittelsystem ist auf Wasserbasis, d.h. ein größerer Teil, z.B. mindestens 20 Gew.-%, des in dem Bindemittelsystem eingesetzten Lösemittels ist Wasser. In dem wässrigen Bindemittelsystem kann nach Bedarf auch organisches Lösemittel enthalten sein, das Bindemittelsystem enthält aber in der Regel weniger als 20 Gew.-%, bevorzugt weniger als 10 Gew.-%, an organischen Lösemitteln, bezogen auf das Gesamtgewicht des Bindemittelsystems.

Das wässrige Bindemittelsystem umfasst ein oder mehrere organische oder anorganische Bindemittel. Hierbei kann es sich um jedes für wässrige Bindemittelsysteme gebräuchliche Bindemittel handeln. Beispiele für geeignete Bindemittel sind Polyester, Polyesteracrylate, Polyesterurethanacrylate, Polyurethane, hierbei unter anderen 1K-Systeme und 2K-Systeme, Reinacrylate, Acrylatcopolymere, hierbei unter anderen Acrylat-Styrol-Copolymere, Methylmethacrylat-Butylacrylat-Copolymere, Acrylat-Vinylacetat-Copolymere, Acrylat-Polyurethan-Copolymere (Hybridpolymere), Acrylat-Expoxy-Copolymere und aromatische Epoxidacrylate, Styrol-Butadien-Copolymere, Polybutadiene, Latex, Epoxide, Polyamide, Polyimide, Polyolefine, Polychloropren, Phenolharze, Ethylenvinylacetate, Melamin-Formaldehyd-Harze und Silicone. Als wässriges Bindemittelsystem können wässrige Bindemittelemulsionen oder -dispersionen der vorstehend genannten Polymere/Bindemittel eingesetzt werden.

Diese bekannten wässrigen Bindemittelsysteme können eingesetzt werden, um Filme bzw. Lackfilme auszubilden. Andererseits werden die Bindemittelsysteme z.B. auch als Kleber oder für die Versiegelung benutzt. Eine weitere Anwendung finden die wässrigen Bindemittelsysteme als klassische Binder, z.B. in der Textilindustrie, in der wässrige Bindemittelsysteme u.a. bei der Herstellung von sogenannten Non-Wovens, z.B. Vliesstoffen, eingesetzt werden. Dabei werden, vereinfacht gesagt, Textilfasern mit einem Bindemittelsystem zu einem flächigen Textil zusammengeklebt. Wässrige Bindemittelsysteme werden auch bei Nichttextil-Anwendungen eingesetzt, z.B. bei Fasermatten wie u.a. Steinwolle zur Isolierung.

Bei dem wässrigen Bindemittelsystem kann es sich bevorzugt um einen wässrigen Lack, einen wässrigen Kleber, eine wässrige Versiegelungsmasse oder einen wässrigen Binder handeln, wobei ein wässriger Lack bevorzugt ist. Diese Bindemittelsysteme können neben dem Bindemittel und dem Lösemittel weitere Komponenten enthalten, die gewöhnlich in solchen wässrigen Bindemittelsystemen, wie Lacken, Klebern, Versiegelungsmassen oder Bindern, eingesetzt werden. Das Additiv gemäß der vorliegenden Erfindung kann zum Lack, Kleber, zur Versiegelungsmasse oder Binder, die bereits alle gewünschten Komponenten enthalten, zugegeben werden. Die Zugabe des Additivs gemäß der Erfindung und der jeweiligen optionalen zusätzlichen Komponenten zum wässrigen Bindemittelsystem ist aber beliebig.

Das wässrige Bindemittelsystem kann neben dem Bindemittel und dem Lösemittel weitere Komponenten enthalten, die gewöhnlich in Bindemittelsystemen eingesetzt werden. Beispiele für solche Komponenten, die für wässrige Bindemittelsysteme, wie z.B. Lacke, Kleber, Versiegelungsmassen oder Binder, insbesondere Lacke geeignet sind, sind Weichmacher, Farbstoffe, Füllstoffe, Pigmente und Hilfsstoffe, wie z.B. Verlaufmittel, Trockenstoffe, Hautverhinderungsmittel, Härtungsbeschleuniger, Benetzungsmittel und Antiabsetzmittel. Der wässrige Lack kann transparent oder farbig sein, wobei ein Klarlack bevorzugt ist. Es kann aber genauso ein pigmentierter Lack eingesetzt werden.

Die Lösemittelbeständigkeit und weiter Eigenschaften des wässrigen Bindemittelsystems werden durch die Zugabe der vorstehend beschriebenen erfindungsgemäßen wässrigen Dispersion oder des Kits von wässrigen Dispersionen überraschend stark verbessert. Die Lösemittelbeständigkeit und die weiteren Eigenschaften des wässrigen Bindemittelsystems beziehen sich auf das gemäß der Bestimmung verwendete und gehärtete Bindemittelsystem, sofern nicht anders angegeben. Die wässrigen Lacke eignen sich zur Beschichtung von Substraten aller Art, wobei der Überzug nach Trocknung und gegebenenfalls Härtung des auf das Substrat aufgetragenen Lacks erhalten wird.

Neben der Verbesserung der Lösemittelbeständigkeit bewirkt die Zugabe der wässrigen Dispersion der Mischung oder des Kits von wässrigen Dispersionen zum wässrigen Bindemittelsystem eine Verbesserung von weiteren Eigenschaften des Bindemittelsystems, insbesondere des wässrigen Lacks, wie z.B. Verbesserungen der Beständigkeit, der Oberflächeneigenschaften und der Trocknungseigenschaften des Bindemittelsystems, Es ergeben sich z.B. Verbesserungen bezüglich Feuchtebeständigkeit, Haftung, Trocknungseigenschaften, Blockfestigkeit, mechanischer Stabilität, Glanzbeständigkeit, Wasserschutzzahl und Bewitterungsbeständigkeit des wässrigen Bindemittelsystems.

Es folgen Beispiele zur weiteren Erläuterung der Erfindung, die den Umfang der Erfindung aber in keiner Weise einschränken sollen.

### Beispiele

### Ausführungsbeispiel 1

Für das Ausführungsbeispiel 1 wurden Mischungen von Additiven und Worleecryl^{®} 7940 (Acrylatcopolymer) hergestellt, so dass im trockenen Lack insgesamt 1 Gew.-% anorganische Additive enthalten waren (s. Tabelle 1). Der Feststoffgehalt der SiO₂-Dispersion (hergestellt aus Aerosil^{®} R8200) betrug 15 %, die ZnO-Dispersion (hergestellt aus ZnO der Firma Microsun, Zinc Oxide P99/30) besaß einen Feststoffgehalt von 46 % und die Fe(O)OH-Dispersion besaß einen Feststoffgehalt von 33 %. Die Additive wurden vor ihrer Mischung mit einem geeigneten Dispergieradditiv in eine wässrige Dispersion überführt.

Die mit den Additiven versehenen Lacke wurden homogenisiert und auf Glasplatten aufgerakelt, wobei eine Nassfilmdicke von ca. 100 µm erzielt wurde. Die Nassfilme wurden bei 70°C für 3 Minuten getrocknet. Die so hergestellten Filme auf den Glasplatten wurden nach EN 13523-11 einem Test auf Beständigkeit gegen MEK unterzogen. In Tabelle 1 findet sich die Anzahl der Doppelhübe, nachdem die Schicht auf der Glasplatte durchgängig zerstört war.

Man sieht, dass die beste MEK-Beständigkeit bei einer Kombination aus drei Additiven (Nr. 1: ZnO, Aerosil R8200 und Fe(O)OH, Transyellow AC500, Rockwood) erzielt wird. Die MEK-Beständigkeit ist bei dieser Beschichtung besser, als das gewichtete Mittel der Beständigkeiten der Einzelkomponenten (Probe Nr. 2 bis Probe Nr. 4).

**Tabelle 1: Zusammensetzung der Lackproben für Ausführungsbeispiel 1**

| Nr. | Lacksystem | Additiv 1 | Additiv-gehalt* (%) | Additiv 2 | Additiv-gehalt* (%) | Additiv 3 | Additiv-gehalt* (%) | Anzahl Doppel-hübe MEK |
|---|---|---|---|---|---|---|---|---|
| 1 | WorleeCryl 7940 | ZnO | 0,88 | SiO₂ | 0,077 | Fe(O)OH | 0,042 | 443 |
| 2 | WorleeCryl 7940 | ZnO | 1 | -- | | -- | | 108 |
| 3 | WorleeCryl 7940 | -- | | SiO₂ | 1 | -- | | 35 |
| 4 | WorleeCryl 7940 | -- | | -- | | Fe(O)OH | 1 | 42 |
| 5 | WorleeCryl 7940 | -- | | -- | | -- | | 60 |

| | | | | | | | | |
|---|---|---|---|---|---|---|---|---|
| * Der Additivgehalt bezieht sich auf die Masse in trockener Schicht (%) Feststoffgehalte der Dispersionen: ZnO in Wasser, 46 %; Aerosil R8200 in Wasser 15 %; Transyellow in Wasser 33 % | | | | | | | | |

### Ausführungsbeispiel 2

Für das Ausführungsbeispiel 2 wurden Mischungen von Additiven und Worleecryl^{®} 7940 (Acrylatcopolymer) hergestellt, so dass im trockenen Lack insgesamt 1 % anorganische Additive enthalten waren (s. Tabelle 2). Der Feststoffgehalt der SiO₂-Dispersion (aus Aerosil^{®} 8200) betrug 15 %, die ZnO-Dispersion (aus ZnO der Firma Microsun, Zinc Oxide P99/30) besaß einen Feststoffgehalt von 46 %.

Die mit den Additiven versehenen Polymerdispersionen wurden homogenisiert und auf Glasplatten aufgerakelt, wobei eine Nassfilmdicke von 100 µm erzielt wurde. Die Nassfilme wurden bei 70°C für 30 Minuten getrocknet. Die so hergestellten Filme auf den Glasplatten wurden nach EN 13523-11 einem Test auf Beständigkeit gegen MEK unterzogen. In Tabelle 2 findet sich die Anzahl der Doppelhübe, nachdem die Schicht auf der Glasplatte durchgängig zerstört war.

Man sieht, dass die beste MEK-Beständigkeit bei einer Kombination aus zwei Additiven (Probe Nr. 6 ZnO und Aerosil R8200) erzielt wird. Die MEK-Beständigkeit ist bei diesem Lack besser, als das gewichtete Mittel der Beständigkeiten der Einzelkomponenten (Probe Nr. 7 und Probe Nr. 8).

**Tabelle 2: Zusammensetzung der Lackproben für Ausführungsbeispiel 2**

| Nr. | Lacksystem | Additiv 1 | Additivgehalt (Masse in trockener Schicht) /% | Additiv 2 | Additivgehalt (Masse in trockener Schicht) /% | Anzahl Doppel-hübe MEK |
|---|---|---|---|---|---|---|
| 6 | WorleeCryl 7940 | ZnO | 0,97 | SiO₂ | 0,03 | 164 |
| 7 | WorleeCryl 7940 | ZnO | 1 | -- | -- | 108 |
| 8 | WorleeCryl 7940 | -- | | SiO₂ | 1 | 35 |
| 9 | WorleeCryl 7940 | -- | -- | -- | -- | 60 |

### Ausführungsbeispiel 3

Für das Ausführungsbeispiel 3 wurden Mischungen von Additiven und Revertex LS-1032-1 (Acrylatpolymerdispersion in Wasser) hergestellt, so dass in der trockenen Schicht insgesamt 1 % anorganische Additive enthalten waren (s. Tabelle 3). Als Verlaufsadditiv wurden 6 % (m/m, bezogen auf die Polymerdispersion) Texanol zu der hergestellten Dispersion gegeben. Der Feststoffgehalt der SiO₂-Dispersion (Levasil 300/30) betrug 30 %, die ZnO-Dispersion (hergestellt aus ZnO der Firma Microsun, Zinc Oxide P99/30) besaß einen Feststoffgehalt von 46 %.

Die mit den Additiven versehenen Polymerdispersionen wurden homogenisiert und auf Glasplatten aufgerakelt, wobei eine Nassfilmdicke von 100 µm erzielt wurde. Die Nassfilme wurden bei 70°C für 30 Minuten getrocknet. Die so hergestellten Filme auf den Glasplatten wurden nach EN 13523-11 einem Test auf Beständigkeit gegen MEK unterzogen. In Tabelle 3 findet sich die Anzahl der Doppelhübe, nach dem die Schicht auf der Glasplatte durchgängig zerstört war.

Man sieht, dass die beste MEK-Beständigkeit bei einer Kombination aus zwei Additiven (Probe Nr. 10 ZnO und Levasil 300/30) erzielt wird. Die MEK-Beständigkeit ist bei dieser Beschichtung besser, als das gewichtete Mittel der Beständigkeiten der Einzelkomponenten (Probe Nr. 11 und Probe Nr. 12).

**Tabelle 3: Zusammensetzung der Lackproben für Ausführungsbeispiel 3**

| Nr. | Lacksystem | Additiv 1 | Additivgehalt (Masse in trockener Schicht) /% | Additiv 2 | Additivgehalt (Masse in trockener Schicht) /% | Anzahl Doppel-hübe MEK |
|---|---|---|---|---|---|---|
| 10 | Revertex LS-1032-1 | ZnO | 0,86 | SiO₂ | 0,14 | 120 |
| 11 | Revertex LS-1032-1 | ZnO | 1 | -- | -- | 68 |
| 12 | Revertex LS-1032-1 | -- | | SiO₂ | 1 | 39 |
| 13 | Revertex LS-1032-1 | -- | -- | -- | -- | 27 |

### Ausführungsbeispiel 4

Für das Ausführungsbeispiel 4 wurden Mischungen von Additiven und einer Lack-Formulierung auf Acrylatbasis (s. Tabelle 4) hergestellt, so dass in der trockenen Schicht insgesamt 0,9 % Additive enthalten waren (s. Tabelle 5). Der Feststoffgehalt der SiO₂-Dispersion (hergestellt aus Aerosil^{®} 8200) betrug 15 %, die ZnO-Dispersion (hergestellt aus ZnO der Firma Microsun, Zinc Oxide P99/30) besaß einen Feststoffgehalt von 40 %.

Als organisches Vergleichsadditiv wurde Aquacer^{®} 535 (Byk^{®}) verwendet, welches ebenfalls zur Verbesserung der Oberflächeneigenschaften eingesetzt wird. Die mit den Additiven versehenen Polymerdispersionen wurden homogenisiert und auf Glasplatten aufgerakelt, wobei eine Nassfilmdicke von 100 µm erzielt wurde. Die Nassfilme wurden bei Raumtemperatur getrocknet. Die Trocknungsdauer bis zum Trocknungsgrad 4 wurde nach DIN 53150 bestimmt.

Die Trocknungsdauer bis zum Trocknungsgrad 4 (s. Tabelle 5) wird durch den Einsatz der wässrigen Dispersion von über 48 h auf 20 h reduziert. Der Einsatz von Aquacer 535 führt nicht zu einer Verkürzung der Trocknungszeit (s. Tabelle 5, Probe 15).

**Tabelle 4: Zusammensetzung der verwendeten Lack-Formulierung "HBST337"**

| Zugabeschritt | Inhaltsstoff | Menge /g |
|---|---|---|
| 1. | Primal AC-337 ER | 195,00 |
| 2. | Tego Foamex 825 | 0,60 |
| 3. | Wasser | 30,00 |
| 4. | Texanol | 6,90 |
| 5. | Ammoniak-Lsg 25% | 0,78 |
| 6. | Wasser | 60,00 |
| 7. | Acrysol RM-12W | 2,01 |
| 8. | Wasser | 0,30 |

**Tabelle 5: Zusammensetzung des Lacks für Ausführungsbeispiel 4**

| Nr. | Lacksystem | Additiv 1 | Additivgehalt (Masse in trockener Schicht) /% | Additiv 2 | Additivgehalt (Masse in trockener Schicht) /% | Trocknungs-dauer bis zum Trocknungs-grad 4 /h |
|---|---|---|---|---|---|---|
| 14 | HBST337 | ZnO | 0,77 | SiO₂ | 0,12 | 20 |
| 15 | HBST337 | Aquace r 535 | 0,9 | -- | -- | > 48 |
| 16 | HBST337 | -- | -- | -- | -- | > 48 |

Der mit der wässrigen Dispersion hergestellte Film auf der Glasplatte wurden außerdem nach EN 13523-11 einem Test auf Beständigkeit gegen MEK unterzogen und auch mit Lacken, in denen nur ZnO- oder SiO₂-Nanopartikel zugegeben wurden, verglichen. In Tabelle 6 findet sich die Anzahl der Doppelhübe, nachdem die Schicht auf der Glasplatte durchgängig zerstört war.

Man sieht, dass die beste MEK-Beständigkeit bei einer Kombination aus zwei Additiven (Probe Nr. 14 ZnO und SiO₂) erzielt wird. Die MEK-Beständigkeit ist bei dieser Probe besser, als das gewichtete Mittel der Beständigkeiten der Einzelkomponenten (Probe Nr. 17 und Probe Nr. 18). Der Einsatz von Aquacer führt nicht zu einer Verbesserung der MEK-Beständigkeit in "HBST337" (s. Probe Nr. 15).

**Tabelle 6: Zusammensetzung des Lacks für Ausführungsbeispiel 4**

| Nr. | Lacksystem | Additiv 1 | Additivgehalt (Masse in trockener Schicht) /% | Additiv 2 | Additivgehalt (Masse in trockener Schicht) /% | Anzahl Doppel-hübe MEK |
|---|---|---|---|---|---|---|
| 14 | HBST337 | ZnO | 0,77 | SiO₂ | 0,12 | 131 |
| 15 | HBST337 | Aquacer 535 | 0,9 | -- | -- | 34 |
| 16 | HBST337 | -- | -- | -- | -- | 43 |
| 17 | HBST337 | ZnO | 0,9 | -- | -- | 107 |
| 18 | HBST337 | -- | | SiO₂ | 0,9 | 57 |

Alle Ausführungsbeispiele zeigen, dass eine Kombination aus Zinkoxid und einem weiteren Nanopartikel gemäß der Erfindung einen überraschenden Zuwachs der Lösemittelbeständigkeit gegenüber der Verwendung der Einzelkomponenten ergibt. Der Einsatz der wässrigen Dispersion der Mischung oder des Kits der wässrigen Dispersion führt auch zu einer Verkürzung der Aushärtezeit des Bindemittelsystems um mehr als die Hälfte.

## Patentansprüche

1. Verwendung einer wässrigen Dispersion, die nanoskalige ZnO-Teilchen und nanoskalige Teilchen aus einem von ZnO verschiedenen Metalloxid, Halbmetalloxid oder Oxosalz umfasst, oder eines Kits aus mindestens zwei wässrigen Dispersionen, wobei eine erste wässrige Dispersion nanoskalige ZnO-Teilchen umfasst und eine oder mehrere weitere wässrige Dispersionen nanoskalige Teilchen aus einem von ZnO verschiedenen Metalloxid, Halbmetalloxid oder Oxosalz umfassen, zur Verbesserung der Lösemittelbeständigkeit eines wässrigen Bindemittelsystems.

2. Verwendung nach Anspruch 1, **dadurch gekennzeichnet, dass** das wässrige Bindemittelsystem ein wässriger Lack, ein wässriger Kleber, eine wässrige Versiegelungsmasse oder ein wässriger Binder ist.

3. Verwendung nach Anspruch 1 oder Anspruch 2, **dadurch gekennzeichnet, dass** die nanoskaligen Teilchen aus einem von ZnO verschiedenen Metalloxid, Halbmetalloxid oder Oxosalz SiO₂, Aluminiumoxid, Titandioxid, Zirconiumdioxid, Cerdioxid, Yttriumoxid, Mischoxide aus Aluminiumoxid und Siliciumdioxid, Alumosilicat, Eisenoxid und Kern-Schale-Partikel mit einer Schale aus SiO₂, Bariumsulfat oder Calciumcarbonat umfassen.

4. Verwendung nach irgendeinem der Ansprüche 1 bis 3, **dadurch gekennzeichnet, dass** die wässrige Dispersion oder die weitere wässrige Dispersion aus dem Kit mindestens zwei verschiedene nanoskalige Teilchen aus einem von ZnO verschiedenen Metalloxid, Halbmetalloxid oder Oxosalz umfassen.

5. Verwendung nach einem der Ansprüche 1 bis 4, **dadurch gekennzeichnet, dass** die nanoskaligen Teilchen aus einem von ZnO verschiedenen Metalloxid, Halbmetalloxid oder Oxosalz hydrophobe Teilchen sind.

6. Verwendung nach Anspruch 5, **dadurch gekennzeichnet, dass** die hydrophoben Teilchen hydrophobes SiO₂ oder hydrophobes Al₂O₃ sind.

7. Verwendung nach einem der Ansprüche 1 bis 6, **dadurch gekennzeichnet, dass** die wässrige Dispersion oder mindestens eine wässrige Dispersion aus dem Kit mindestens ein Dispergiermittel umfasst.

8. Verwendung nach einem der Ansprüche 1 bis 7, **dadurch gekennzeichnet, dass** der Anteil der nanoskaligen Teilchen aus einem von ZnO verschiedenen Metalloxid, Halbmetalloxid oder Oxosalz bezogen auf das Gesamtgewicht von nanoskaligen ZnO-Teilchen und nanoskaligen Teilchen aus einem von ZnO verschiedenen Metalloxid, Halbmetalloxid oder Oxosalz 0,1 bis 50 Gew.-% ist.

9. Wässrige Dispersion oder Kit aus mindestens zwei wässrigen Dispersionen zur Verbesserung der Beständigkeit und der Trocknungseigenschaften eines wässrigen Bindemittelsystems, wobei die wässrige Dispersion nanoskalige ZnO-Teilchen und nanoskalige Teilchen aus einem von ZnO verschiedenen Metalloxid, Halbmetalloxid oder Oxosalz umfasst und der Kit aus mindestens zwei wässrigen Dispersionen eine erste wässrige Dispersion, die nanoskalige ZnO-Teilchen umfasst, und eine oder mehrere weitere wässrige Dispersionen, die nanoskalige Teilchen aus einem von ZnO verschiedenen Metalloxid, Halbmetalloxid oder Oxosalz umfassen, beinhaltet.

10. Wässriges Bindemittelsystem, umfassend ein organisches oder anorganisches Bindemittel und eine wässrige Dispersion, die nanoskalige ZnO-Teilchen und nanoskalige Teilchen aus einem von ZnO verschiedenen Metalloxid, Halbmetalloxid oder Oxosalz umfasst.

11. Wässriges Bindemittelsystem nach Anspruch 10, **dadurch gekennzeichnet, dass** das wässrige Bindemittelsystem ein wässriger Lack, ein wässriger Kleber, eine Versiegelungsmasse oder ein wässriger Binder ist.

12. Wässriges Bindemittelsystem nach Anspruch 10 oder Anspruch 11, **dadurch gekennzeichnet, dass** das Bindemittel ein physikalisch, chemisch oder durch Strahlen härtendes Bindemittel ist.
